# EUROPEAN PATENT APPLICATION

(11) **EP 4 556 091 A1**
(43) Date of publication of application: **21.05.2025**
(21) Application number: 23213113.6
(22) Date of filing: 29.11.2023
(51) Int. Cl.: B01D 5/00, B01D 53/00, C01D 15/04, C01D 15/08, C01F 7/56, C01F 7/62, C01G 49/10, C21B 15/00, C22B 1/00, C22B 1/02, C22B 1/08, C22B 1/16, C22B 1/24, C22B 1/245, C22B 1/248, C22B 3/04, C22B 3/22, C22B 3/44, C22B 5/10, C22B 5/16, C22B 7/00

(54) **METHOD FOR RECOVERING VALUABLE METALS FROM POSITIVE ELECTRODE OF WASTE LITHIUM IRON PHOSPHATE**

(30) Priority: 14.11.2023 CN 202311510539
(71) Applicant: Shenzhen Huineng Energy Storage Materials Engineering Research Center Co., Ltd, Shenzhen City 518000 (CN); National Engineering Research Center of Advanced Energy Storage Materials (Shenzhen) Co., Ltd, Shenzhen, Guangdong 518000 (CN)
(72) Inventor: ZHONG, Faping, Shenzhen City, 518000 (CN); HE, Chihuan, Shenzhen City, 518000 (CN); JIANG, Subin, Shenzhen City, 518000 (CN); LIU, Hongbing, Shenzhen City, 518000 (CN); ZHU, Jiqun, Shenzhen City, 518000 (CN); TAN, Shuifa, Shenzhen City, 518000 (CN)
(74) Representative: AWA Sweden AB

(57) **Abstract**

Provided is a method for recovering valuable metals from a positive electrode of waste lithium iron phosphate. The method includes: subjecting a waste lithium iron phosphate battery to discharging and disassembly; subjecting a lithium iron phosphate positive plate obtained by the disassembly to breaking, followed by high temperature treatment; uniformly mixing a product obtained by the high temperature treatment with a carbon material, and roasting a mixture in a high-purity Cl₂ atmosphere; subjecting a gas phase product obtained by the roasting to fractional quenching and condensation to recover ferric chloride and aluminum chloride separately; and subjecting a solid phase product obtained by the roasting to water leaching and filtration to obtain a lithium chloride aqueous solution, and then adding sodium carbonate to precipitate lithium carbonate. As a one-step carbothermal chlorination method is adopted in combination with a two-stage quenching and condensation process in the present invention, the use of acidic solutions during recovery of valuable metals from the lithium iron phosphate positive electrode can be avoided, and the use of large amounts of alkaline solutions or extraction agents to separate and recover chlorides step by step is also not required. The method of the present invention has the advantages of a high metal recovery rate, a low comprehensive cost and good economic benefits, social benefits and environmental protection benefits.

## Description

### FIELD OF TECHNOLOGY

The present invention belongs to the field of recovery of waste lithium-ion batteries, and specifically relates to a method for recovering valuable metals from a positive electrode of waste lithium iron phosphate.

### BACKGROUND

With rapid increase of the use number of consumer electronic products and electric vehicles, especially with wide application of lithium iron phosphate batteries in new energy vehicles in recent years, the number of waste and decommissioned lithium-ion batteries also shows an explosive increase trend. As lithium-ion batteries contain lithium, aluminum, iron and other valuable metals, how to reasonably recover and recycle the waste lithium-ion batteries is a problem to be solved urgently.

At present, methods for treatment of the waste lithium-ion batteries mainly include a wet process and a fire process, in which the wet process or a fire assisted wet process is used as a main technical route. However, the wet recovery process includes leaching and extracting valuable metals from positive electrode materials, which requires the use of large amounts of acidic solutions and alkaline solutions. Moreover, the process has the problems of many leaching steps, long leaching time, a low leaching rate and the like. In addition, greater pressure to environmental protection is also caused by the use of large amounts of acidic solutions and alkaline solutions.

In order to avoid the use of large amounts of acidic solutions and alkaline solutions in a metal leaching stage, high-temperature chlorination roasting methods, which include chlorinating metals in positive active substances at high temperature in a chlorine atmosphere and then recovering various metals step by step, are disclosed in CN115149134A, CN116759686A, CN103060567A, CN112342394A and the like in the prior art. However, the above methods require the manner of precipitation or extraction with a solvent to achieve step-by-step recovery of metal chlorides, and still have the problems of consumption of large amounts of alkaline reagents or extraction agents and metal loss in a step-by-step recovery process, thereby reducing the recovery rate of valuable metals.

### SUMMARY

Aiming at the above technical problems, the present invention adopts a one-step carbothermal chlorination method in combination with a two-stage quenching and condensation process, which can avoid the use of acidic reagents, alkaline reagents or extraction solvents during recovery of valuable metals, and has good environmental protection benefits. In addition, the method of the present invention has the advantages of a short process flow, outstanding economic benefits, a high recovery rate of valuable metals, a low comprehensive recovery cost and the like.

In order to realize the above purpose, the present invention provides a method for recovering valuable metals from a positive electrode of waste lithium iron phosphate. The method sequentially includes the following steps:

(1) subjecting a waste lithium iron phosphate battery to discharging and disassembly to obtain a lithium iron phosphate positive plate;

(2) subjecting the lithium iron phosphate positive plate to breaking, followed by high temperature treatment in an air atmosphere;

(3) uniformly mixing a product obtained by the high temperature treatment with a carbon material by ball milling, then transferring a mixture to a sintering device, introducing high-purity Cl₂ after vacuumizing the sintering device, and heating and roasting the mixture in the Cl₂ atmosphere;

(4) enabling a gas phase product produced in the roasting process to sequentially pass through a quenching and condensation separation device 1 and a quenching and condensation separation device 2; introducing SiCl₄ that is preheated to 220-240°C and flows backward with the gas phase product into a heat exchange tube of the quenching and condensation separation device 1, and recovering condensed FeCl₃ in a deposition chamber of the quenching and condensation separation device 1; and introducing SiCl₄ that is preheated to 100-120°C and flows backward with the gas phase product into a heat exchange tube of the quenching and condensation separation device 2, and recovering condensed AlCl₃ in a deposition chamber of the quenching and condensation separation device 2; and

(5) subjecting a solid phase product obtained by the roasting in step (3) to water leaching, stirring and filtration to obtain a LiCl aqueous solution, and then adding sodium carbonate into the LiCl aqueous solution to recover and precipitate Li₂CO₃.

Further, in step (2), the lithium iron phosphate positive plate has an average particle size of equal to or less than 3 mm after the breaking.

Further, in step (2), the high temperature treatment is performed at a heating rate of 5-10°C/min and a temperature of 400-600°C, and the temperature is maintained for 3-6 h.

Further, in step (3), the carbon material includes at least one of graphite, carbon black, carbon fibers, carbon nanotubes and amorphous carbon.

Further, in step (3), the mass ratio of the product obtained by the high temperature treatment to the carbon material is 10: 1 to 5:1.

Further, in step (3), the high-purity Cl₂ is introduced at a rate of 10-50 mL/min.

Further, in step (3), the roasting is performed in two stages; the roasting in the first stage is performed at a heating rate of 3-5°C/min and a temperature of 180-300°C, and the temperature is maintained for 1-3 h; and the roasting in the second stage is performed at a heating rate of 5-10°C/min and a temperature of 350-550°C, and the temperature is maintained for 3-6 h.

Further, in step (4), before introduced into the heat exchange tube of the quenching and condensation separation device 2, the SiCl₄ is preheated to 100-120°C first, and the SiCl₄ is introduced into the heat exchange tube of the quenching and condensation separation device 2 at a flow rate of 5-10 mL/min.

Further, in step (4), before introduced into the heat exchange tube of the quenching and condensation separation device 1, the SiCl₄ is preheated to 220-240°C first, and the SiCl₄ is introduced into the heat exchange tube of the quenching and condensation separation device 1 at a flow rate of 5-10 mL/min.

Further, in step (5), water used in the water leaching is deionized water; and the water leaching and the stirring are performed for 1-4 h.

The present invention has the following beneficial effects.

As a one-step carbothermal chlorination method is adopted in combination with a two-stage quenching and condensation process to recover a lithium iron phosphate positive electrode in the present invention, lithium carbonate, ferric chloride and aluminum chloride can be recovered and obtained separately based on different boiling points of chlorides (LiCl, FeCl₃ and AlCl₃) generated by a carbothermal chlorination reaction (referring to Table 1 below), so that metal loss caused by step-by-step recovery of a solid phase product of a chloride mixture is avoided, and the recovery rate of the metallic lithium and the metallic aluminum can be obviously improved. Compared with the prior art, the present invention has the advantages that the use of large amounts of alkaline solutions or extraction agents to separate and recover chlorides step by step is not required, the metal recovery rate is improved, the process flow is shortened, areas occupied by equipment are reduced, wastewater treatment burden is relived, and the method has good economic benefits, social benefits and environmental protection benefits.

**Table 1**

| Substance | LiCl | FeCl₃ | AlCl₃ | SiCl₄ |
|---|---|---|---|---|
| Melting point (°C) | 609 | 306 | 194 | -70 |
| Boiling point (°C) | 1382 | 316 | 178 | 57.6 |

### BRIEF DESCRIPTION OF THE DRAWINGS

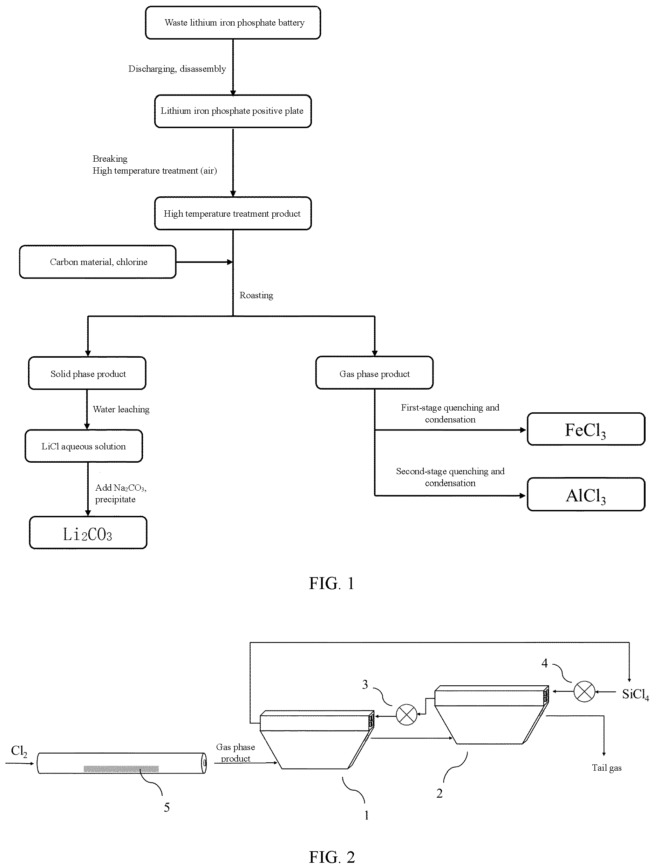

FIG. 1 is a flow chart of recovering valuable metals from a positive electrode of waste lithium iron phosphate used in an embodiment of the present invention.
FIG. 2 is a schematic diagram of recovering valuable metals from a positive electrode of waste lithium iron phosphate used in an embodiment of the present invention.

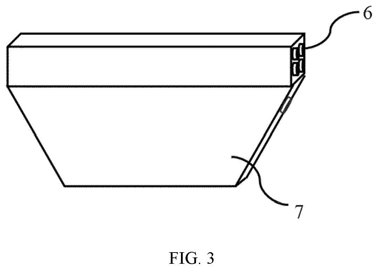

FIG. 3 is a schematic diagram of a quenching and condensation separation device of the present invention.

Illustration symbols are as follows:
1, 2: quenching and condensation separation device;
3, 4: preheating device;
5: roasted solid phase product;
6: heat exchange tube of a quenching and condensation separation device; and
7: deposition chamber of a quenching and condensation separation device.

### DESCRIPTION OF THE EMBODIMENTS

The present invention is further described below in combination with examples and comparative examples.

### Example 1

### A method in the present example includes the following steps.

A waste lithium iron phosphate battery was discharged and disassembled to obtain a lithium iron phosphate positive plate. The obtained lithium iron phosphate positive plate was directly broken to obtain particles with an average particle size of equal to or less than 3 mm, and then the material was placed in a Muffle furnace for high temperature treatment at 500°C at a heating rate of 5°C/min for 3 h in an air atmosphere to remove a polymer binder and a residual electrolyte lithium salt. A product obtained by the high temperature treatment was uniformly mixed with graphite at a mass ratio of 5:1 by ball milling, and then a mixed material was transferred into a tube furnace. After the tube furnace was vacuumized, high-purity Cl₂ was introduced at a flow rate of 30 mL/min, and the mixed material was heated and roasted in the Cl₂ atmosphere, where the roasting process was carried out in two stages: the mixed material was heated to 300°C at a heating rate of 5°C/min during the roasting in the first stage, and the temperature was maintained for 1 h; and the mixed material was heated to 550°C at a heating rate of 5°C/min during the roasting in the second stage, and the temperature was maintained for 3 h.

A gas phase product produced in the roasting process was enabled to sequentially pass through a quenching and condensation separation device 1 and a quenching and condensation separation device 2. SiCl₄ that was preheated to 220°C and flowed backward with the gas phase product was introduced into a heat exchange tube of the quenching and condensation separation device 1 at a flow rate of 5 mL/min, and condensed FeCl₃ was recovered in a deposition chamber of the quenching and condensation separation device 1. SiCl₄ that was preheated to 120°C and flowed backward with the gas phase product was introduced into a heat exchange tube of the quenching and condensation separation device 2 at a flow rate of 5 mL/min, and condensed AlCl₃ was recovered in a deposition chamber of the quenching and condensation separation device 2.

A solid phase product obtained by the roasting was subjected to water leaching with deionized water and stirring for 1 h, followed by suction filtration to obtain a LiCl aqueous solution, and then sodium carbonate was added into the LiCl aqueous solution to recover and precipitate Li₂CO₃.

### Example 2

### A method in the present example includes the following steps.

A waste lithium iron phosphate battery was discharged and disassembled to obtain a lithium iron phosphate positive plate. The obtained lithium iron phosphate positive plate was directly broken to obtain particles with an average particle size of equal to or less than 3 mm, and then the material was placed in a Muffle furnace for high temperature treatment at 400°C at a heating rate of 10°C/min for 6 h in an air atmosphere to remove a polymer binder and a residual electrolyte lithium salt. A product obtained by the high temperature treatment was uniformly mixed with carbon black at a mass ratio of 10:1 by ball milling, and then a mixed material was transferred into a tube furnace. After the tube furnace was vacuumized, high-purity Cl₂ was introduced at a flow rate of 10 mL/min, and the mixed material was heated and roasted in the Cl₂ atmosphere, where the roasting process was carried out in two stages: the mixed material was heated to 180°C at a heating rate of 3°C/min during the roasting in the first stage, and the temperature was maintained for 3 h; and the mixed material was heated to 450°C at a heating rate of 5°C/min during the roasting in the second stage, and the temperature was maintained for 3 h.

A gas phase product produced in the roasting process was enabled to sequentially pass through a quenching and condensation separation device 1 and a quenching and condensation separation device 2. SiCl₄ that was preheated to 240°C and flowed backward with the gas phase product was introduced into a heat exchange tube of the quenching and condensation separation device 1 at a flow rate of 10 mL/min, and condensed FeCl₃ was recovered in a deposition chamber of the quenching and condensation separation device 1. SiCl₄ that was preheated to 100°C and flowed backward with the gas phase product was introduced into a heat exchange tube of the quenching and condensation separation device 2 at a flow rate of 10 mL/min, and condensed AlCl₃ was recovered in a deposition chamber of the quenching and condensation separation device 2.

A solid phase product obtained by the roasting was subjected to water leaching with deionized water and stirring for 4 hours, followed by suction filtration to obtain a LiCl aqueous solution, and then sodium carbonate was added into the LiCl aqueous solution to recover and precipitate Li₂CO₃.

### Example 3

### A method in the present example includes the following steps.

A waste lithium iron phosphate battery was discharged and disassembled to obtain a lithium iron phosphate positive plate. The obtained lithium iron phosphate positive plate was directly broken to obtain particles with an average particle size of equal to or less than 3 mm, and then the material was placed in a Muffle furnace for high temperature treatment at 600°C at a heating rate of 10°C/min for 3 h in an air atmosphere to remove a polymer binder and a residual electrolyte lithium salt. A product obtained by the high temperature treatment was uniformly mixed with carbon fibers at a mass ratio of 10:1 by ball milling, and then a mixed material was transferred into a tube furnace. After the tube furnace was vacuumized, high-purity Cl₂ was introduced at a flow rate of 50 mL/min, and the mixed material was heated and roasted in the Cl₂ atmosphere, where the roasting process was carried out in two stages: the mixed material was heated to 250°C at a heating rate of 5°C/min during the roasting in the first stage, and the temperature was maintained for 2 h; and the mixed material was heated to 350°C at a heating rate of 10°C/min during the roasting in the second stage, and the temperature was maintained for 6 h.

A gas phase product produced in the roasting process was enabled to sequentially pass through a quenching and condensation separation device 1 and a quenching and condensation separation device 2. SiCl₄ that was preheated to 230°C and flowed backward with the gas phase product was introduced into a heat exchange tube of the quenching and condensation separation device 1 at a flow rate of 10 mL/min, and condensed FeCl₃ was recovered in a deposition chamber of the quenching and condensation separation device 1. SiCl₄ that was preheated to 110°C and flowed backward with the gas phase product was introduced into a heat exchange tube of the quenching and condensation separation device 2 at a flow rate of 10 mL/min, and condensed AlCl₃ was recovered in a deposition chamber of the quenching and condensation separation device 2.

A solid phase product obtained by the roasting was subjected to water leaching with deionized water and stirring for 3 hours, followed by suction filtration to obtain a LiCl aqueous solution, and then sodium carbonate was added into the LiCl aqueous solution to recover and precipitate Li₂CO₃.

### Comparative Example

A waste lithium iron phosphate battery was discharged and disassembled to obtain a lithium iron phosphate positive plate. The obtained lithium iron phosphate positive plate was directly broken to obtain particles with an average particle size of equal to or less than 3 mm, and then the material was placed in a Muffle furnace for high temperature treatment at 500°C at a heating rate of 5°C/min for 3 h in an air atmosphere to remove a polymer binder and a residual electrolyte lithium salt. A product obtained by the high temperature treatment was uniformly mixed with graphite at a mass ratio of 5:1 by ball milling, and then a mixed material was placed in a tube furnace. After the tube furnace was vacuumized, high-purity Cl₂ was introduced at a flow rate of 30 mL/min, and the mixed material was heated and roasted in the Cl₂ atmosphere, where the mixed material was heated to 300°C at a heating rate of 5°C/min in the roasting process, and the temperature was maintained for 4 h.

A gas phase product produced in the roasting process was enabled to pass through a condensation device, and AlCl₃ was recovered in the condensation device.

A solid phase product obtained by the roasting was subjected to water leaching with deionized water and stirring for 1 h, followed by suction filtration to obtain an aqueous solution of a mixed metal chloride salt containing LiCl and FeCl₃, then ammonia was added into the aqueous solution of a mixed metal chloride salt to adjust the pH of the solution to 3.5, and the solution was subjected to suction filtration to obtain a ferric hydroxide precipitate and a filtrate.

Then, sodium carbonate was added into the filtrate to recover and precipitate Li₂CO₃.

### Test of the recovery rate:

The recovery rate is calculated by the following formula: recovery rate=actual mass of a product/theoretical mass of the product× 100%, in which the theoretical mass of the product is obtained by determining the content of various elements in a broken product of a lithium iron phosphate positive plate using an inductively coupled plasma (ICP) method and then calculating the theoretical mass value of the product that is completely converted thereto.

Test results of the recovery rate of various elements in Examples 1-3 and Comparative Example are shown in Table 2 below.

**Table 2**

| | Li (%) | Fe (%) | Al (%) |
|---|---|---|---|
| Example 1 | 99.3 | 97.2 | 95.6 |
| Example 2 | 98.6 | 97.8 | 94.3 |
| Example 3 | 98.8 | 96.9 | 96.2 |
| Comparative Example | 71.6 | 82.6 | 94.5 |

As can be seen from Table 2, compared with Comparative Example, Examples 1-3 have the advantage that the recovery rate of Li can be significantly improved as a mixed chloride salt of Li and Fe is not required to be recovered step by step. In addition, the recovery rate of the metallic Fe and the metallic in Examples 1-3 is higher, indicating that the recovery purity of lithium carbonate in Examples 1-3 is also higher than that in Comparative Example.

## Claims

1. A method for recovering valuable metals from a positive electrode of waste lithium iron phosphate, **characterized by** sequentially comprising the following steps:
(1) subjecting a waste lithium iron phosphate battery to discharging and disassembly to obtain a lithium iron phosphate positive plate;
(2) subjecting the lithium iron phosphate positive plate to breaking, followed by high temperature treatment in an air atmosphere;
(3) uniformly mixing a product obtained by the high temperature treatment with a carbon material by ball milling, then transferring a mixture to a sintering device, introducing high-purity Cl₂ after vacuumizing the sintering device, and heating and roasting the mixture in the Cl₂ atmosphere;
(4) enabling a gas phase product produced in the roasting process to sequentially pass through a quenching and condensation separation device 1 and a quenching and condensation separation device 2; introducing SiCl₄ that is preheated to 220-240°C and flows backward with the gas phase product into a heat exchange tube of the quenching and condensation separation device 1, and recovering condensed FeCl₃ in a deposition chamber of the quenching and condensation separation device 1; and introducing SiCl₄ that is preheated to 100-120°C and flows backward with the gas phase product into a heat exchange tube of the quenching and condensation separation device 2, and recovering condensed AlCl₃ in a deposition chamber of the quenching and condensation separation device 2; and
(5) subjecting a solid phase product obtained by the roasting in step (3) to water leaching, stirring and filtration to obtain a LiCl aqueous solution, and then adding sodium carbonate into the LiCl aqueous solution to recover and precipitate Li₂CO₃.

2. The method according to claim 1, **characterized in that** in step (2), the lithium iron phosphate positive plate has an average particle size of equal to or less than 3 mm after the breaking.

3. The method according to claim 1, **characterized in that** in step (2), the high temperature treatment is performed at a heating rate of 5-10°C/min and a temperature of 400-600°C, and the temperature is maintained for 3-6 h.

4. The method according to claim 1, **characterized in that** in step (3), the carbon material comprises at least one of graphite, carbon black, carbon fibers, carbon nanotubes and amorphous carbon.

5. The method according to claim 1, **characterized in that** in step (3), the mass ratio of the product obtained by the high temperature treatment to the carbon material is 10: 1 to 5:1.

6. The method according to claim 1, **characterized in that** in step (3), the high-purity Cl₂ is introduced at a rate of 10-50 mL/min.

7. The method according to claim 1, **characterized in that** in step (3), the roasting is performed in two stages; the roasting in the first stage is performed at a heating rate of 3-5°C/min and a temperature of 180-300°C, and the temperature is maintained for 1-3 h; and the roasting in the second stage is performed at a heating rate of 5-10°C/min and a temperature of 350-550°C, and the temperature is maintained for 3-6 h.

8. The method according to claim 1, **characterized in that** in step (4), before introduced into the heat exchange tube of the quenching and condensation separation device 2, the SiCl₄ is preheated to 100-120°C first, and the SiCl₄ is introduced into the heat exchange tube of the quenching and condensation separation device 2 at a flow rate of 5-10 mL/min.

9. The method according to claim 1, **characterized in that** in step (4), before introduced into the heat exchange tube of the quenching and condensation separation device 1, the SiCl₄ is preheated to 220-240°C first, and the SiCl₄ is introduced into the heat exchange tube of the quenching and condensation separation device 1 at a flow rate of 5-10 mL/min.

10. The method according to claim 1, **characterized in that** in step (5), water used in the water leaching is deionized water; and the water leaching and the stirring are performed for 1-4 h.
